# EUROPÄISCHE PATENTSCHRIFT

(11) **EP 3 120 040 B1**
(45) Veröffentlichungstag und Bekanntmachung des Hinweises auf die Patenterteilung: **24.07.2019**
(21) Anmeldenummer: 15704724.2
(22) Anmeldetag: 16.01.2015
(51) Int. Cl.: F16F 13/14, F16F 13/28

(54) **HYDRAULISCHE BUCHSE**
HYDRAULIC BUSHING
DOUILLE HYDRAULIQUE

(30) Priorität: 19.03.2014 DE 102014205061
(43) Veröffentlichungstag der Anmeldung: 25.01.2017
(73) Patentinhaber: ContiTech Luftfedersysteme GmbH, 30165 Hannover (DE)
(72) Erfinder: MOHAMMAD-BEIGI, Sara, 22303 Hamburg (DE); SANZ, Andre, 21077 Hamburg (DE)
(74) Vertreter: Kilsch, Armin Ralph
(86) Internationale Anmeldenummer: PCT/EP2015/050725
(87) Internationale Veröffentlichungsnummer: WO 2015/139857

(56) Entgegenhaltungen:
- DE-A1- 3 214 037
- DE-A1- 3 743 555
- DE-A1- 10 035 026
- GB-A- 2 322 427

## Beschreibung

Die Erfindung betrifft eine hydraulische Buchse, insbesondere Radsatzführungsbuchse in einem Lager zur elastischen Verbindung von Teilen eines Schienenfahrwerks, wobei die hydraulische Buchse in einem inneren Gehäuseelement eine axiale Aufnahmeöffnung zur Aufnahme eines Zapfens aufweist und das innere Gehäuseelement radial von einem äußeren Gehäuseelement unter Ausbildung eines Ringspaltes umfasst wird, wobei in dem Ringspalt ein Ringfederelement aus gummielastischen Material angeordnet ist, wobei das Ringfederelement mindestens zwei über Teilbereiche seines Umfangs sich erstreckende und mit einem Hydraulikfluid befüllbare Kammern zum äußeren Gehäuseelement bildet und die befüllbaren Kammern durch mindestens einen Verbindungskanal / Überlaufkanal miteinander verbunden sind.

Ebenso betrifft die Erfindung ein Lager mit einer solchen hydraulischen Buchse , insbesondere in einem Lager zur elastischen Verbindung von Teilen eines Schienenfahrwerks.

Derartige zur Beeinflussung und/oder Einstellung und eines Dämpfungsverhaltens von Lagern an Fahrzeugen, insbesondere Schienenfahrzeugen einsetzbare Buchsen sind bereits in unterschiedlichen Ausführungen bekannt. Solche auch als Radsatzführungsbuchsen bezeichnete Buchsen werden zum elastischen Verbinden von beweglichen Teilen wie etwa den Teilen eines Laufwerks eines Fahrzeugs, insbesondere eines Schienenfahrzeugs eingesetzt.

In einem in der Regel metallenen Körper ist ein Ringspaltraum mit einem Ringfederelement aus gummielastischen Material ausgefüllt, um eine Elastizität der verbundenen Teile, d.h. zwischen äußerem Gehäuse der Lagebuchse und innerem Zapfen oder Zapfenaufnahme bereitzustellen und eine statische Steifigkeit zu erreichen.

Das Ringfederelement aus gummielastischen Material umfasst und bildet zum Gehäuseelement ein oder mehrere mindestens über Teilbereiche des Umfangs der Buchse sich erstreckende und mit einem Hydraulikfluid/einer Hydraulikflüssigkeit befüllbare Kammern. Diese befüllbaren Kammern sind untereinander oder mit einer Ausgleichskammer durch mindestens einen Verbindungskanal verbunden.

Bei Belastung der hydraulischen Buchse wird durch das Einfedern des Ringefederelementes eine Kammer verkleinert, so dass ein Teil der Hydraulikflüssigkeit in der Kammer durch den Verbindungskanal in die andere Kammer oder in die Ausgleichskammer strömt. Der Verbindungskanal wirkt dann als hydraulische Drossel, nämlich als Drosselkanal. Das Durchströmen des entsprechend ausgebildeten Drosselkanals erzeugt Dissipation und somit Dämpfungsarbeit.

Eine hydraulische Flüssigkeit wird somit in zumindest teilweise von dem gummielastischen Material umgebenen, etwa diametral gegenüberliegend angeordneten Kammern zum Bereitstellen weiterer schwingungsabsorbierender Eigenschaften bereitgestellt. Dabei dient der Verbindungskanal mit seiner Drosseleigenschaft als Schwingungstilger oder zum Bereitstellen einer dynamischen Steifigkeit in entsprechender Belastungsrichtung dient.

Die Dämpfungseigenschaften solcher hydraulischen Buchsen sind aufgrund ihrer Bauweise frequenzabhängig. Üblicherweise werden niederfrequente Schwingungen, also Schwingungen mit Frequenzen unterhalb von ca. 2 Hz, die im allgemeinen mit Amplituden von ca. 10 mm auftreten, stark gedämpft, während hochfrequente Schwingungen, also Schwingungen im Frequenzbereich oberhalb des genannten Wertes, aufgrund der Trägheit und Inkompressibilität der Hydraulikflüssigkeit und der Gummifeder nahezu ungedämpft durchgehen. Diese Eigenschaften macht man sich dadurch zu Nutze, dass durch die Ausgestaltung des Verbindungskanals die Dämpfung und die Steifigkeit frequenzabhängig eingestellt werden.

Das auf einem Schwingungsverhalten einer hydraulischen Flüssigkeitssäule beruhende elastische Verhalten kann dabei hinsichtlich der Steifigkeit und Dämpfung über die Länge des Verbindungskanals eingestellt werden. Bei einem langen Überlaufkanal können von der Buchse aufgefangene Stöße die Hydraulikflüssigkeit über den Überlaufkanal von einer in die andere Kammer nur dann hinreichend gut leiten, wenn der zeitliche Abstand der Stöße bzw. Schwingungen groß, d.h. die Frequenz der Schwingungen klein ist. Erfolgen die mechanischen Belastungen dagegen mit einer hohen Frequenz, so kann aufgrund der Trägheit und Inkompressibilität der Hydraulikflüssigkeit, des zur Verfügung stehenden Kanalquerschitts und der Kanallänge der Verbindungs- oder Überlaufkanal nicht schnell genug zwischen zwei aufeinanderfolgenden Stößen durchströmt bzw. überwunden werden, um durch einen Überlauf der belasteten Kammer zur unbelasteten Kammer eine Elastizität bereitzustellen.

Diesen Effekt macht man sich zunutze, um beispielsweise bei Schienenfahrzeugen bei schneller Fahrt und damit bei einer kurzen Abfolge von Unebenheiten auf der Schiene und dadurch auftretende mechanische Stöße eine größere Steifigkeit bereitzustellen. Dadurch wird die Fahrsicherheit bei hohen Geschwindigkeiten durch eine harte Lagerung und damit eine Vermeidung einer zu großen Weichheit gewährleistet.

Bei geringen Geschwindigkeiten, das heißt bei einer Kurvenfahrt und dergleichen ist dagegen eine geringe Steifigkeit von Vorteil und die entsprechende Weichheit wird dadurch erreicht, dass die entsprechende Hydraulikfluidsäule zwischen zwei aufeinander folgenden Stößen von einer Kammer in die andere Kammer überführt werden kann. Die Grenzfrequenz, die das steife Verhalten von dem dämpfenden Verhalten mit einer weichen Lagerung abgrenzt, wird durch die Kanallänge derart gegeben, dass je länger der Überlaufkanal ist, umso kleiner ist die Grenzfrequenz oberhalb der eine steife Lagerung mit einer harten Buchse zu beobachten ist.

Aus der DE 103 10 633 A1 ist eine Buchse für ein Lager zur elastischen Verbindung von Teilen eines Laufwerks beschrieben. Die insbesondere für Schienenfahrzeuge bestimmte Buchse weist ein inneres Gehäuse auf, um das zur Bildung eines Ringspaltes radial beabstandet ein äußeres Gehäuse vorgesehen ist. In dem Ringspalt befindet sich ein gummielastisches Element, das zwei diametral gegenüberliegende Kammern begrenzt, die mit einer hydraulischen Flüssigkeit gefüllt sind und über einen als Schwingungstilger ausgebildeten Überlaufkanal miteinander verbunden sind. Der Überlaufkanal kann dabei wendelförmig ausgeführt sein und am Außen- und/oder Innenumfang der Buchse bzw. ihrer Gehäuseteile entlang geführt sein, läuft aber mindestens teilweise entweder durch das Innenteil oder Außenteil des Lagers.

Eine bevorzugte Ausführung der Buchse zeichnet sich dadurch aus, dass der Überlaufkanal zwischen einer Innenwandung des inneren Gehäuseteils und einer etwa wendelförmig in einen Außenbereich eines von der Buchse umschlossenen bolzenförmigen Elements eingebrachten Nut gebildet wird. Das Einbringen von Nuten an Innen- oder Außenflächen von zylinderförmigen Körpern ist aber aufwendig. Insbesondere ist das Einbringen einer umlaufenden Nut an einem Lenkerbolzen eines Achslenkers, also an einem Kraft-übertragenden Element ohne Einschränkung von dessen Funktion nur bei einer Ausführung des Achslenkers aus einem hochwertigen Material wie etwa aus einem vergüteten Stahl mit Nachteilen möglich.

Eine Ausgestaltung bzw. das Vorsehen von Kanälen ist aus bekannten, beispielsweise bei Fahrzeugen eingesetzten Hydrolagern bekannt. So beschreibt die deutsche Patentschrift 199 19 876 C1 ein steuerbares Hydrolager mit einer Arbeitskammer, die ringförmig von einer mit einer elektro-rheologischen Flüssigkeit gefüllten Ausgleichskammer umgeben ist. Ein ringspaltförmiger Überströmkanal verbindet die Arbeitskammer und die Ausgleichskammer und weist zwei sich gegenüberliegende Elektroden zur Erzeugung eines Hochspannungsfeldes darin auf, um die Viskosität der darin befindlichen Flüssigkeit verändern bzw. einstellen zu können. Der Überströmkanal verläuft spiralförmig um die Arbeitskammer, wobei die Wandungen des Überströmkanals aus elektrisch isolierenden Trägerschichten gebildet sind. Eine Änderung der Kanallänge ist hier aber mit einem großen Konstruktionsaufwand verbunden.

So ist aus der DE 3410 781 A1 ein Zweikammer-Motorlager mit hydraulischer Dämpfung mit zwei mit einer Flüssigkeit gefüllten, von gummielastischen Umfangswänden umgebenen Kammern, die über einen in einer Düsenplatte verlaufenden Düsenkanal miteinander verbunden sind, bekannt. Bei dem Zweikammer-Motorlager ist die Düsenplatte horizontal so geteilt, dass zumindest ein Teil des Düsenkanals in einer unteren Plattenhälfte verläuft, die über einen zentralen, das Lagergehäuse durchsetzenden Zapfen unter Veränderung von Länge und/oder Querschnitt des freien Düsenkanals gegenüber der fest eingebauten oberen Plattenhälfte um ihre Mittelachse verdrehbar ist. Somit lassen sich auf einfache Weise Länge und/oder Querschnitt des Düsenkanals verändern und so selbst bei eingebautem Lager in einem Fahrzeug eine Einstellung von individuellen Dämpfungseigenschaften realisieren. Die Realisierung der Verstellbarkeit setzt hier allerdings einen großen Konstruktionsaufwand voraus und schließt einen Einsatz in üblichen Lagerbuchsen aus.

Das US-Patent 4,909,490 offenbart eine Vorrichtung für Maschinen, insbesondere elastische Aufhängungen für Fahrzeugmotoren oder Kabinen von Lastkraftwagen zur Entkopplung von Vibrationen. Ein zwei Kammern trennender Körper ist aus zwei Platten gebildet, die mittels Vorsprüngen und entgegengesetzt in der jeweils anderen Platte angebrachten Bohrungen passgenau miteinander verbindbar sind. In einer der Platten oder passgenau in beiden Platten ist eine spiralförmigen Nut zur Ausbildung des Überströmkanals für die Hydraulikflüssigkeit vorgesehen. Durch die Länge des Kanals kann das gewünschte Dämpfungs- bzw. Steifigkeitsverhalten der Vorrichtung eingestellt werden. Die Länge des Kanals kann zur Einstellung der gewünschten Dämpfungseigenschaften verändert werden, jedoch ist die Einstellung der Kanallänge an einem zwischen zwei Kammern befindlichen zentralen Bereich der Vorrichtung aufwendig. Denn es ist zur Änderung der Kanallänge eine vollständige Zerlegung der Vorrichtung notwendig.

Die DE 100 35 026 A1 offenbart ein hydraulisch dämpfendes Elastomerlager mit einem elastischen Verbindungskörper, der zwischen einem ersten Lagerbauteil und einem zweiten Lagerbauteil angeordnet ist und diese beiden Lagerbauteile elastisch miteinander verbindet. Das Elastomerlager weist zwei Kammern auf, die mit einem flüssigen Dämpfungsmittel gefüllt sind und über zwei Drosselkanäle miteinander kommunizieren. Dabei enthält einer der Drosselkanäle einen Tilger, der sich in Abhängigkeit von Druckdifferenzen zwischen den Kammern so verstellt, dass durch die Verstellbewegungen der Öffnungsquerschnitt des zweiten Drosselkanals gesteuert wird.

Die GB 2 322 427 A offenbart eine hydraulisch dämpfende Lagervorrichtung, bei der zwei Hydraulikkammern vorgesehen sind, die über einen Verbindungskanal miteinander kommunizieren. Die Lagervorrichtung weist außen liegende Ringe zur axial endseitigen Begrenzung der Hydraulikkammern auf. Einer der Ringe ist mit äußeren Ringnuten versehen, die im Zusammenwirken mit der äußeren Lagerhülse den Verbindungskanal bilden. Der Erfindung stellt sich die Aufgabe, die gattungsgemäße Buchse so zu gestalten, dass ein dynamisches Steifigkeitsverhalten durch eine Veränderung der Länge des Verbindungskanals auf einfache Weise vorgegeben werden kann.

Die Erfindung löst die Aufgabe in einem ersten Aspekt mit den im Anspruch 1 angegebenen Merkmalen. Dabei ist an jeder Stirnseite der hydraulischen Buchse ein axial außenseitig angeordnetes ringförmiges Einfassungselement vorgesehen, welches im Zusammenwirken mit den Gehäuseelementen und dem Ringfederelement den Ringspalt axial begrenzt. Der Verbindungskanal ist dabei in einem der Einfassungselemente angeordnet, wobei das Einfassungselement Einrichtungen, die von außen zugänglich und beeinflussbar sind, zur Bildung oder Bereitstellung des Verbindungskanals aufweist.

Demgemäß schlägt die Erfindung eine gattungsgemäße Buchse zur Aufnahme eines Zapfens des Laufwerks und/oder der Maschinenelemente in einer axialen Aufnahmeöffnung, die von einem inneren Gehäuseelement definiert wird, vor. Das innere Gehäuseelement wird zu jeder Stirnseite der Buchse zumindest teilweise von einem radial umlaufenden Einfassungselement und radial von einem äußeren Gehäuseelement unter Ausbildung eines Ringspaltes umfasst, wobei der Ringspalt derart mit einem gummielastischen Material ausgefüllt ist, dass zwischen dem äußeren Gehäuseelement und dem gummielastischen Material wenigstens zwei mit einem Hydraulikfluid befüllbare Kammern gebildet werden, die über einen Verbindungs- oder Überlaufkanal miteinander verbunden sind. Durch die erfindungsgemäße Konstruktion des Verbindungskanals wird vermieden, dass umfangreiche und komplizierte Herstellvorgänge in Form von z.B. spanender Bearbeitung des Au-ßen- und/oder Innenumfang der Buchse bzw. ihrer Gehäuseteile durchgeführt werden müssen, um einen Verbindungskanal bereitzustellen, der dann etwa auch noch in Form von präzisen Radialbohrungen durch das Innenteil des Lagers geführt werden muss.

Weitere Vorteile ergeben sich aus den Unteransprüchen. In einer vorteilhaften Weiterbildung weist so eines der Einfassungselemente den Verbindungskanal und das andere Einfassungselemente einen mit mindestens einer befüllbaren Kammer verbundenen Füllkanal und/oder Entlüftungskanal auf, was die Zugänglichkeit und die Befüllung der Kammern erheblich vereinfacht.

In einer weiteren vorteilhaften Ausbildung ist der Verbindungskanal radial außerhalb der im Ringspaltes vorgesehenen mit einem Hydraulikfluid befüllbaren Kammern und/oder außerhalb des im Ringspaltes vorgesehenen Ringfederelementes ausgebildet.

Nach der Erfindung wird offenbart, dass die Einrichtungen zur Bereitstellung eines Verbindungskanal von außen zugänglich und beeinflussbar ausgebildet sind bringt die Erfindung den Vorteil mit sich, dass die den Überlaufkanal bildenden Elemente ohne eine komplette Demontage und ohne ein Zerlegen des Lagers zugänglich sind.

In einer weiteren vorteilhaften Ausbildung verläuft der Verbindungskanal in einer im wesentlichen parallelen Ebene zu einer der Stirnseiten der Buchse und um die axiale Aufnahmeöffnung. Der die axiale Aufnahmeöffnung umgebende Verbindungskanal ist damit zu einem stirnseitigen Ende der Buchse hin angeordnet und parallel zur Stirnseite oder Stirnebene in wenigstens einer Ebene vorgesehen und somit auf ganzer Länge außerhalb der eher unzugänglichen Innenteile der hydraulischen Buchse angeordnet.

Die Erfindung bringt also den Vorteil mit sich, dass die den Verbindungskanalbildenden Elemente von außen leicht zugänglich sind und die Länge des Verbindungskanal auch ohne konstruktive Eingriffe an weiteren Teilen der Buchse bzw. der von dieser abzufedernden, Kraft-übertragenden Elemente verändert werden kann. Die erfindungsgemäße Lösung erlaubt darüber hinaus mit Vorteil die Verwendung üblicher Materialien wie insbesondere handelsüblicher Stahlssorten und erfordert keine besonderen Materialien mit vorgebbaren besonderen mechanischen Eigenschaften.

Ein weiterer Vorteil liegt darin, dass die Länge des Verbindungskanal auch ohne konstruktive Eingriffe an weiteren Teilen der Buchse bzw. der von dieser abzufedernden, Kraft-übertragenden Elemente verändert werden kann, wozu insbesondere eine unten noch aufgeführte erfindungsgemäße Ausbildung vorteilhaft ist, bei der die Länge des Verbindungskanals durch ein relatives Verdrehen der den Verbindungskanal bildenden Teile/Ringe verändert werden kann.

Das gummielastische Material bestimmt das elastische Verhalten, wohingegen das Hydraulikfluid die dynamischen Eigenschaften der Buchse bestimmt. Entsprechend ist das Hydraulikfluid für eine Verhärtung bzw. Dämpfung bei einer dynamischen mechanischen Belastung der Buchse bzw. der mit dieser verbundenen Laufwerks- oder Maschinenteile verantwortlich. Die statischen Eigenschaften werden von dem gummielastischen Material bereitgestellt..

In einem zweiten Aspekt löst die Erfindung die Aufgabe mit einem Lager zur elastischen Verbindung von Teilen eines Laufwerks, eines Fahrzeugs, insbesondere eines Schienenfahrzeugs, und/oder von beweglichen Maschinenelementen, bei dem der Zapfen des Laufwerks und/oder der Maschinenelemente von der Aufnahmeöffnung einer erfindungsgemäßen Buchse aufgenommen wird.

In einer weiteren vorteilhaften Ausbildung verläuft der Verbindungskanal in einer in einem der Einfassungselemente eingebrachten Ringausnehmung. So kann der Überlauf- oder Verbindungskanal fertigungstechnisch auf einfache Weise realisiert werden. Die Ringausnehmung ist dabei vorzugsweise von der zugeordneten Stirnseite der Buchse in das Stützelement eingebracht.

Gleiche Vorteile ergeben sich bei einer weiteren vorteilhaften Ausbildung, bei der der Verbindungskanal als eine in einem der Einfassungselemente eingebrachte Ringnut oder Ringausnehmung ausgebildet ist, wobei der Kanal bzw. der Kanalquerschnitt von Ringelementen oder oder Ringabschnitten abgedeckt oder begrenzt ist.

In einer weiteren vorteilhaften Ausbildung werden die Einrichtungen zur Bereitstellung eines Verbindungskanals durch einen oder mehrere um die axiale Aufnahmeöffnung geführte, in der Ringausnehmung angeodnete und mit einer Nut oder Ausnehmung versehene Ringe gebildet, wobei die die Nut oder Ausnehmung axial von weiteren Ringen oder Ringabschnitten abgedeckt ist. So kann auf einfache Weise die Geometrie und damit die Größe und das Durchflussvolumen des Verbindungskanal den Erfordernissen entsprechend eingestellt werden.

In einer weiteren vorteilhaften Ausbildung sind die zur Abdeckung der Nuten oder Ausnehmungen vorgesehenen Ringe oder Ringabschnitten mit Bohrungen oder Durchgängen zu den Nuten oder Ausnehmungen versehen.

In einer weiteren vorteilhaften Ausbildung ist der Verbindungskanal im Wesentlichen als ebene Spirale oder Mehrfachspirale ausgeführt. Dies erlaubt ebenso ein platzsparende Anordnung des Verbindungskanals wie eine Ausbildung des Verbindungskanals im Wesentlichen kreisbogenförmig oder aus kreisbogenförmigen Teilkanälen bestehend.

Bevorzugt wird die Ausnehmung zur Ausbildung des Verbindungskanal auch hierbei axial von Ringen ode Ringabschnitten umgeben. Auf engstem Raum kann der Verbindungskanal besonders vorteilhaft als ebene Spirale ausgeführt sein. Diese Ausführungsform hat Vorteile hinsichtlich einer Vorgabe eines längeren Verbindungskanal. Denkbar ist natürlich grundsätzlich auch eine mäanderförmige Ausführung der Ausnehmung.

Durch eine teilkreisbogenförmig Ausbildung des Verbindungskanals ergeben sich Vorteile, wenn die befüllbaren Kammern diametral gegenüberliegend angeordnet sind. Die Kammern können aber auch in einem von 180° abweichenden Winkelabstand von einander beabstandet sein, um in einer Richtung und der dazu entgegengesetzten Richtung ein anderes mechanisches Verhalten zu erzeugen.

In einer weiteren vorteilhaften Ausbildung sind mehrere gegeneinander verdrehbare mit einer Nut oder Ausnehmung versehene Ringe und/oder gegeneinander verdrehbare und mit Bohrungen oder Durchgängen versehene die einzelnenVerbindungskanäle bzw. Kanalteile begrenzende Ringe oder Ringabschnitten axial so nebeneinander angeordnet, dass durch ein relativ zueinander erfolgendes Verdrehen der Ringe oder Ringabschnitten die Länge des Verbindungskanals zwischen den Kammern verändert wird. So wird durch eine einfache Drehbewegung die Länge des insgesamt durchströmten Verbindungskanals und damit die Dämpfungscharakteristik verändert oder auf den Anwendungsfall angepasst, ohne das für jede Anwendung neue Bauteile benötigt würden (Gleichteileprinzip).

Bevorzugt ist der die axiale Aufnahmeöffnung umgebende Abschnitt des Verbindungskanals demgemäß in einem sandwichartigen Paket aus zwei jeweils mit einer spiralförmigen Ausnehmung versehenen Ringelementen gebildet, die axial außenseitig von Ringabschnitten umgeben werden. Das Paket aus den Ringelementen ist bevorzugt in einer in dem einen Einfassungselement eingebrachten Ringausnehmung vorgesehen. Ein Ringelement wird von einem scheibenartigen Trennring und einem Abschluss-Ringelement umgeben. Das andere Ringelement wird von dem scheibenartigen Trennring und einem ringartigen Anschlagabschnitt des Einfassungselements umgeben. Die in den Ringelementen verlaufenden Ausnehmungen sind über passgenau vorgesehene Bohrungen in dem in dem Paket mittig vorgesehenen Ring kommunizierend miteinander verbunden. Mit Vorteil lässt sich eine solche Ausführung der erfindungsgemäßen Buchse mit dem Hydraulikfluid auf einfache Weise unter Vermeidung von Lufteinschlüssen füllen. Radial wird das Paket von dem äußeren Gehäuseelement umgeben.

Ist der Abschnitt des Verbindungskanals durch eine sandwichartige Abfolge von mit einer Ausnehmung versehenen Ringelementen und zwischen diesen angeordneten Trennringen mit entsprechenden Bohrungen oder Durchgängen vorgegeben, so kann durch eine passgenaue Anordnung ein Überlaufkanal in mehreren Ebenen bereitgestellt werden. Zur Verkürzung der Länge des Verbindungskanal können die über- bzw. nebeneinander liegenden Ringelemente teilweise durch Trennringe ersetzt werden.

Der Verbindungskanal kann so ausgebildet sein, dass er den Ringspalt radial wenigstens teilweise umfasst.

Besonders bevorzugt werden die Ringabschnitte aus einem parallel zur Stirnseite der Buchse vorgesehenen, ringartigen Anschlagabschnitt des einen Einfassungselements und wenigstens einem Ringelement gebildet.

Zur Bereitstellung der gewünschten dynamischen Steifigkeit hat es sich als besonders vorteilhaft gezeigt, wenn der Verbindungs- oder Überlaufkanal die axiale Aufnahmeöffnung in wenigstens zwei parallel zu der Stirnseite der Buchse verlaufenden Ebenen umgibt. Entsprechend kann eine Länge des Durchgangs dadurch vergrößert werden, dass mindestens zwei parallel zu der Stirnseite verlaufende Ringe vorgesehen sind, in denen jeweils eine Ausnehmung eingebracht ist. Dabei müssen die Ringe zur Bildung des Durchgangs bzw. Verbindungskanal in axialer Richtung jeweils beidseitig von Ringabschnitten umgeben sein und die Ausnehmungen durch axiale Bohrungen verbunden sein. So ergibt sich ein großer Einstellungsbereich für die Länge des Verbindungskanals.

Das innere Gehäuseelement ist bevorzugt im Wesentlichen zylinderförmig und die Einfassungselemente sind bevorzugt im Wesentlichen ringförmig ausgebildet.

Es versteht sich, dass das erfindungsgemäß eingesetzte gummielastische Material ausreichend steif sein muss, um eine Volumenänderung der Kammern bei einer mechanischen Stoßbelastung der Buchse zu bewirken.

Die Erfindung wird nachfolgend anhand von einem Ausführungsbeispiel im Zusammenhang mit einer begleitenden, teilweise vereinfachten Zeichnungen näher erläutert. Dabei zeigen:
- Fig. 1: eine perspektivische Ansicht einer erfindungsgemäßen Buchse,
- Fig. 2: eine Seitenansicht der Buchse gemäß Fig. 1,
- Fig. 3: eine Schnittdarstellung der erfindungsgemäßen Buchse entsprechend der Linie A-A in Fig. 2,
- Fig. 4: eine teilweise explosionsartige perspektivische Darstellung der Buchse und
- Fig. 5: eine Abfolge von einen Verbindungs- oder Überlaufkanal bildenden einzelnen Ringelementen und Trennringen.

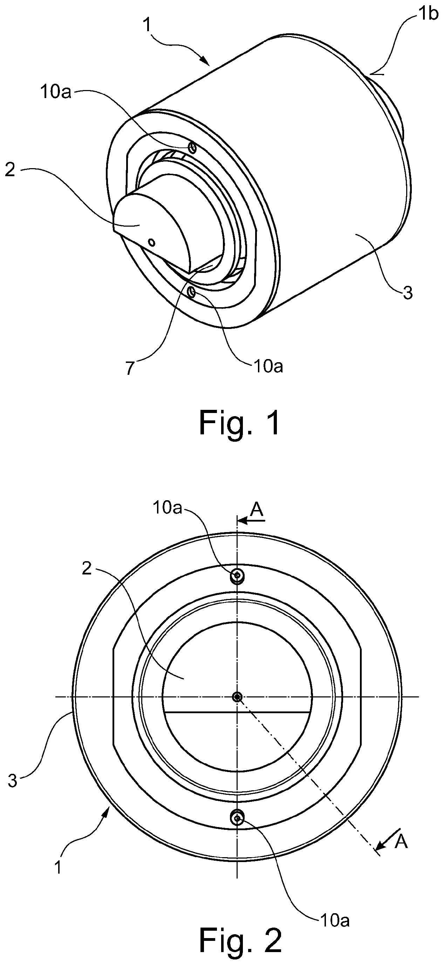

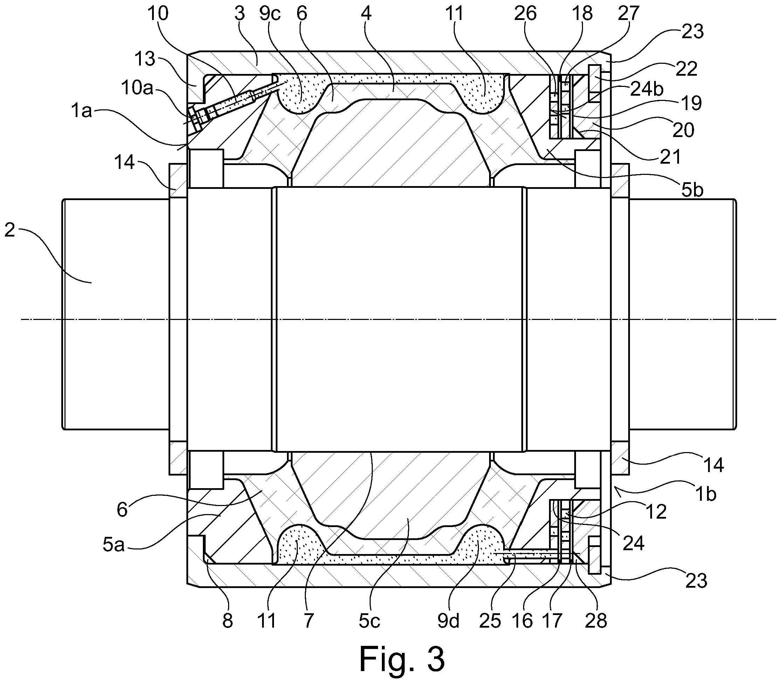

Nach Fig. 1 ist eine erfindungsgemäße als Radsatz-Führungsbuchse für ein Schienenfahrzeug zu verwendende hydraulische Buchse 1 als Hohlzylinder ausgebildet, der einen Lenkerbolzen 2 eines Lenkgestänges des Schienenfahrzeugs aufnimmt. Der Lenkerbolzen 2 weist eine Abflachung auf, die zur drehsicheren Aufnahme des Lenkerbolzenz in einer Traverse des Lenkgestänges dient. Die Buchse 1 weist ein im Wesentlichen hülsenartiges äußeres Gehäuseelement 3 auf, das, wie in Fig. 3 gezeigt, unter Bildung eines Ringspaltes 4 ein inneres, im Wesentlichen zylinderförmig ausgeführtes Gehäuseelement 5c radial umgibt. Wie in Fig. 3 gezeigt ist, ist in dem Ringspalt 4 ein gummielastisches Federungselement, nämlich ein Ringfederelement 6 vorgesehen.

An jeder Stirnseite 1a, 1b der hydraulischen Buchse 1 ist ein axial außenseitig angeordnetes ringförmiges Einfassungselement 5a, 5b vorgesehen, welches im Zusammenwirken mit den Gehäuseelementen 3, 5c und dem Ringfederelement 6 den Ringspalt axial begrenzt. Zu Stirnseiten 1a, 1b der Buchse 1 ist in der hier gezeigten Ausführung das innere Gehäuseelement 5c jeweils derart von einem hier als Stützring ausgeführten Einfassungselement 5a, 5b umgeben, dass der Ringspalt 4 einen im Wesentlichen U-förmigen Querschnitt mit etwas schräg verlaufenden Schenkeln aufweist.. Das Ringfederelement 6 begrenzt mit dem äußeren Gehäuseelement 3 jeweils hier zwei diametral gegenüberliegende Kammern 9c, 9d, bei dieser Ausführung in Fahrtrichtung des Schienenfahrzeugs diametral gegenüberliegend.

Das innere Gehäuseelement 5c und die beiden Stützringe 5a,b sind vorzugsweise aus metallenen Materialien gebildet und in an sich bekannter Weise über das gummielastische Federelement 6 in axialer Richtung über einen Vulkanisierungsprozess miteinander verbunden. Dabei dient der im Wesentlichen parallel zum äußeren Gehäuseelement 3 verlaufender Abschnitt des Ringfederelements bzw.gummielastischen Federelements 6 zur Aufnahme von mechanischen, auf das Laufwerk oder die Maschinenteile ausgeübten Belastungen oder Schlägen. Die Schenkel des Ringfederelements 6, d.h. die jeweils zu den Stirnseiten 1a,1b abgeschrägt verlaufende Abschnitte des Ringfederelements 6 wirken als Blähfedern, um die Blähsteifigkeit bereitzustellen.

Die Kammern 9c, 9d sind über einen stutzenartigen, zur Stirnseite 1a in einer Öffnung 10a auslaufenden Einfüllkanal 10 mit einer Hydraulikflüssigkeit wie Glykol, wie in Fig. 3 durch Bezugszeichen 11 angedeutet befüllbar.

Die Kammern 9c und 9d sind darüber hinaus durch einen Verbindungskanal miteinander verbunden. In der Fig. 3 ist ein aus mehreren Teilkanälen bestehender bzw. zusammengesetzter Verbindungskanal 12 in seinen Querschnitten gezeigt, der eine den Lenkerbolzen 2 aufnehmende axiale Aufnahmeöffnung 7 umgibt und für einen Austausch von Hydraulikflüssigkeit 11 zwischen den beiden Kammern 9c, 9d notwendig ist.

Wie aus Fig. 3 ersichtlich, ist das äußere Gehäuseelement 3 zur Stirnseite 1a der Buchse 1 mit Kragenabschnitten 13 umgebogen. An der Stirnseite 1a wird der aus der Buchse 1 hervortretende Lenkerbolzen 2 von einem Anlagering 14 umgeben. Innenseitig ist an den Kragenabschnitten 13 ein Dichtungsrichtung 8 vorgesehen, der das zu dem äußeren Gehäuseelement 3 in einer Spielpassung befindlichen ringförmiges Einfassungselement 5a nach außen abdichtet.

Der Verbindungskanal 12 verläuft bei dieser Ausführung in einer im Einfassungselement 5b eingebrachten Ringausnehmung 24 und wird durch die Einrichtungen zur Bereitstellung eines Verbindungskanals, nämlich durch sandwichartig geschichtete, zusammenwirkende Ringe und ringförmge Elemente gebildet.

Im Einzelnen sind dies hier mehrere um die axiale Aufnahmeöffnung 7 geführte, in der Ringausnehmung angeodnete und mit einer Nut oder Ausnehmung 26, 27 versehene Ringe 16, 17, wobei die die Nut oder Ausnehmung 26, 27 axial von weiteren Ringen oder Ringabschnitten 24b, 18, 19 abgedeckt ist.

Die zur Abdeckung der Nuten oder Ausnehmungen vorgesehenen Ringe oder Ringabschnitten 18, 19 sind mit entsprechenden Bohrungen oder Durchgängen 33, 38, 39, 43 zu den Nuten oder Ausnehmungen 26, 27, d.h. zu den einzelnen Teilen oder Bereichen des Verbindungskanals versehen, sodass sich die somit durch Bohrungen miteinander verbundene Nuten oder Ausnehmungen zur gesamten Länge des Verbindungskanals 12 addieren.

Der die axiale Aufnahmeöffnung 7 umgebende Verbindungskanal 12 ist somit in zwei zu den Stirnseiten 1a, 1b der Buchse 1 parallelen Ebenen ausgebildet und ist durch Ausnehmungen in Ringelementen 16, 17 vorgegeben, die durch einen Trennring 18 beabstandet sind, welcher mit der/den genannten Bohrungen versehen ist. Das zur Stirnseite 1b hin weisende Ringelement 17 ist zur Stirnseite 1b hin von einem Abschluss-Ringelement 19 umgeben, das an seinem Innendurchmesser und an seinem Außendurchmesser zu einem außen liegenden Deckelring 20 jeweils mit O-Ringen 21, 28 flüssigkeitsdicht abgedichtet ist. Zur Stirnseite 1b hin ist der Deckelring 20 mit Hilfe eines Sicherungsrings 22 festgelegt, wozu der Sicherungsring 22 einen stirnringartigen Abschnitt 23 des äußeren Gehäuseelementes 3 hintergreift.

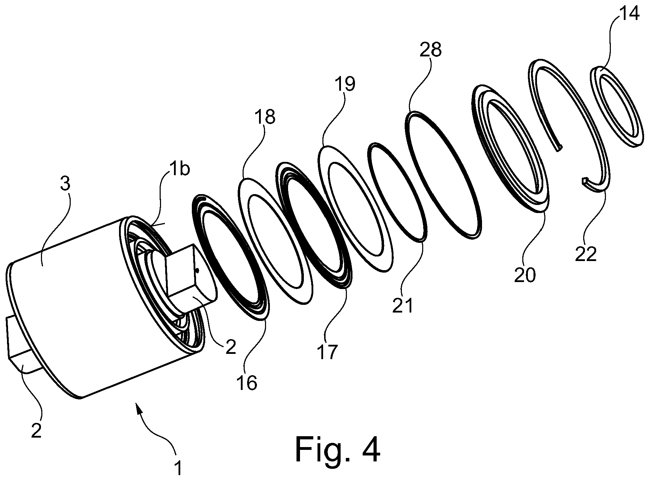

Die zusammenwirkenden Elemente, nämlich inneres Gehäuseelement 5c, gummielastisches Federelement 6 und die beiden Einfassungselemente 5a,b sind durch Vulkanisation miteinander Verbunden und werden in axialer Richtung zusammengedrückt und dann mit Hilfe des Sicherungsringes 22 unter Druck gehalten, um in einem Betriebsstand der Buchse 1 das Entstehen von Zugspannungen zu vermeiden. Zur Stirnseite 1b hin wird die Buchse 1 ebenfalls mit einem den Lenkerbolzen 2 umgebenden Anlagering 14 (Fign. 3, 4) abgeschlossen. Die Anlageringe 14 sind stirnseitig auf einen entsprechenden Absatz des Lenkerbolzens 2 gepresst.

Sofern die Buchse 1 nicht maschinell automatisiert über den Einfüllkanal 10 mit der Hydraulikflüssigkeit 11 befüllt wird, kann dies manuell auf einfache Weise dadurch realisiert werden, dass man die Buchse auf die Kragenabschnitte 13 des äußeren Gehäuseelements 3 stellt und dann die Kammern befüllt. An der Stirnseite 1b wird die Buchse 1 mittels eines entsprechend dimensionierten Rohres vorgespannt, um den auch unter Betriebsbedingungen herrschenden Hohlraum auszubilden und diesen entsprechend ausreichend mit Hydraulikflüssigkeit auszufüllen. Dabei sind der Deckelring 20 und der Sicherungsring 22 noch nicht an der Buchse 1 festgelegt.

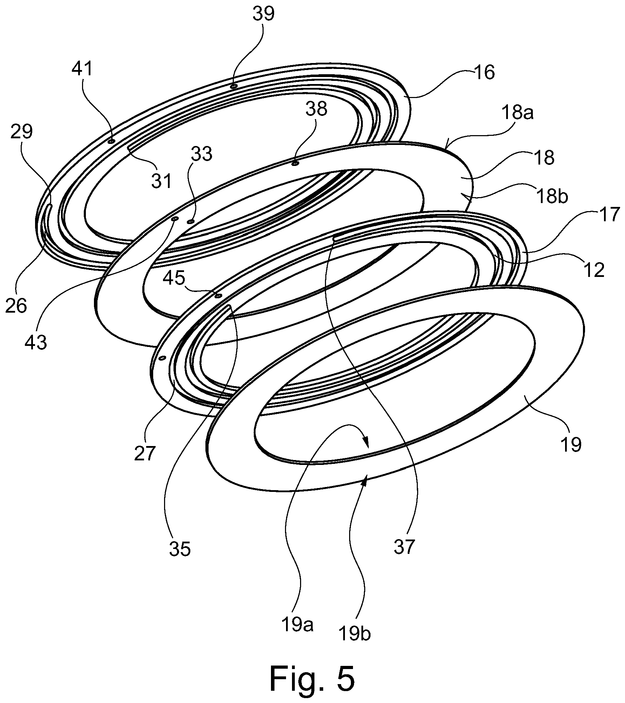

Der die Aufnahmeöffnung 7 umgebende Verbindungskanal 12 wird also erfindungsgemäß wie in Fig. 4, 5 veranschaulicht durch eine parallel zu Stirnseiten 1a, 1b der erfindungsgemäßen Buchse 1 angeordnete Abfolge der mit Ausnehmungen versehenen Ringelemente 16, 17 und des scheibenartigen Trennrings 18 und des Abschluss-Ringelements 19 gebildet. Die Ringelemente 16, 17 sind in eine von der Stirnseite 1b der Buchse 1 her in den Stützring 5b eingebrachte Ringausnehmung 24 eingesetzt.

Dabei wird der Verbindungskanal 12 durch eine jeweils spiralförmig in die Ringelemente 16, 17 eingebrachte Ausnehmung 26, 27 vorgegeben. In der in Fig. 3 gezeigten Einbaulage der Ringelemente 16, 17 und des dazugehörigen Trennrings 18 bzw. Abschluss-Ringelements 19 wird der Verbindungskanal 12 durch die jeweils in den Ringelementen 16, 17 verlaufenden Ausnehmungen 26, 27 vorgegeben und durch die jedes Ringelement 16, 17 seitlich umgebenden flächigen Elemente seitlich, d.h.axial begrenzt. Das Ringelement 16 wird axial von einem parallel zur Stirnseite 1b der Buchse 1 vorgesehenen ringartigen Anschlagabschnitt 24b des Stützrings 5b und dem Trennring 18 begrenzt. Durch die Begrenzung des daneben liegenden Ringelements 17 wird die darin eingebrachte spiralförmige Ausnehmung 27 axial zur Stirnseite 1a der Buchse 1 hin von dem Trennring 18 und zur gegenüberliegenden Stirnseite 1b von dem Abschluss-Ringelement 19 begrenzt.

Die spiralförmige Ausnehmung 26 in dem Ringelement 16 wird zur Stirnseite 1a der Buchse 1 hin von dem Anschlagabschnitt 24b des Stützrings 5b und einer Seite 18a (Fig. 5) des scheibenartigen Trennrings 18 zur Bildung des Durchgangs begrenzt. Der innerhalb des Ringelementes 17 verlaufende Verbindungskanal 12 wird von einer Seite 18b des Trennrings 18 und einer Seite 19a des Abschluss-Ringelementes 19 seitlich begrenzt. Seiten 19a und 19b erkennt man in der Fig. 5, hier ist die Seite 19b die obenliegende, dem Betrachter in dieser Explosions-Ansicht zugewandte Seite des Ringelements 19, während die Seite 19a die Rückseite ist.

Sofern auf die hydraulische Buchse 1 ein Stoß ausgeübt wird, überträgt das gummielastische Federelement 6 diesen auf die Kammern 9c, 9d bzw. die darin befindliche Hydraulikflüssigkeit. Das führt bei einer den Stoß aufnehmenden Kammer 9c, 9d zu einer Verkleinerung der entsprechenden Kammer 9c, 9d.

Auf Grund der Steifigkeit des gummielastischen Federelementes 6 wird entsprechend ein Übertrag von Hydraulikflüssigkeit 11 von der stoßbelasteten Kammer 9c, 9d auf die diametral gegenüber liegende Kammer 9c, 9d bewirkt, sodass Hydraulikflüssigkeit 11 aus der Kammer 9c, 9d in den Verbindungskanal 12 eintritt.

Die Kammern 9c, 9d sind dazu durch innerhalb des Stützrings 5b vorgesehene und mit dem Verbindungskanal 12 innerhalb der Ringausnehmung 24 flüssigkeitsleitend verbundene Zu- bzw. Abfuhrkanäle, von denen in Fig. 3 nur ein solcher bei Bezugszeichen 25 gezeigt ist, verbunden. Die Ringelemente 16, 17 sind bezüglich des ringartigen Anschlagabschnitts 24b so vorgesehen, dass die Ablauf- bzw. Zulaufkanäle darin passgenau mit den Ausnehmungen 26, 27 zum Austausch von Hydraulikflüssigkeit 11 liegen.

Wie bei Bezugszeichen 29 in Fig. 5 gezeigt tritt die Hydraulikflüssigkeit 11 dann in die spiralförmige Ausnehmung 26 ein und umläuft die Aufnahmeöffnung 7 innerhalb des Ringelementes 16 zwischen dem Trennring 18 und dem ringartigen Anschlagabschnitt 24b des inneren Gehäuseelements 5, um dann am Ende wie bei Bezugszeichen 31 angedeutet aus der spiralförmigen Ausnehmung 26 durch die Bohrung 33 in dem Trennring 18 in die im Ringelement 17 bei Bezugszeichen 35 beginnende spiralförmige Ausnehmung 27 einzutreten und nach deren Durchlauf am Endpunkt 37 der spiralförmigen Ausnehmung 27 durch die Bohrung 38 in dem Trennring 18 wieder durch die Bohrung 39 in dem Ringelement 16 auszutreten, um so über den nicht gezeigten Zulaufkanal in die gegenüber liegende Kammer 9d zu gelangen.

Damit insbesondere die Passgenauigkeit der Bohrungen 33, 38, 39 und damit ein Durchtritt der Hydraulikflüssigkeit von der einen Kammer 9c, 9d in die jeweils andere Kammer 9c, 9d und durch den Trennring 18 zwischen den beiden Ringelemente 16, 17 gewährleistet ist, sind die Ringelemente 16, 17 und der zwischen ihnen befindliche Trennring 18 mit Hilfe eines nicht gezeigten, durch die Bohrungen 41, 43, 45 gehenden Arretierungsstiftes gegen eine insbesondere bei einem Befüllvorgang der Buchse 1 mit der Hydraulikflüssigkeit 11 mögliche Verschiebung gesichert.

Soll erfindungsgemäß zur Einstellung einer Steifigkeit bzw. einer Grenzfrequenz zwischen einem weichen Lagerverhalten und einem harten Lagerverhalten eine Länge des Verbindungskanal, d.h. des Durchgangs 12 verändert werden, so kann erfindungsgemäß durch ein entsprechendes Lösen der die Ringelemente 16, 17, den Trennring 18 und das Abschluss-Ringelement 19 sowie den Deckelring 20 fixierenden Elemente im Bereich der Stirnseite 1b der Buchse 1 ein Austausch der Ringelemente 16, 17 durch Ringelemente mit einer etwa andersartig ausgeführten spiralförmigen Ausnehmung erfolgen oder eines der Ringelemente 16, 17 seiner Dicke entsprechend durch ein oder mehrere weitere Trennringe 18 ersetzt werden.

Eine weitere vorteilhafte Möglichkeit zur Veränderung der Dämpfungscharakteristik der im Ausführungsbeispiel dargestellten hydraulischen Buchse besteht darin, dass die mit mit einer Nut oder Ausnehmung 26, 27 versehene Ringe 16, 17 und/oder die mit Bohrungen oder Durchgängen 33, 38, 39 versehene Ringe oder Ringabschnitten 18, 19 gegeneinander verdreht werden, dass Länge des aus Einzelelementen zusammengesetzten Verbindungskanals 12 zwischen den Kammern 9c, 9d und damit dessen Dämpfungscharakteristik verändert werden.

Ebenso ist es möglich, die Breite der in den Ringelementen 16, 17 verlaufenden Ausnehmungen oder die Dicke der Ringelemente als solche zu verändern und so erfindungsgemäß den Querschnitt des Verbindungskanal 12 und damit das Durchflussvolumen zu verändern, um die gewünschte Dämpfung bzw. Steifigkeit erreichen zu können. Vorteilhafterweise werden die Ausnehmungen 26, 27 durch Laserschneiden erzeugt. Die vorzugsweise als Ringelement 16, 17 benutzten Bleche weisen eine Dicke von drei mm auf und der Trennring 18 sowie das Abschluss-Ringelement 19 sind einen mm dick. Die Ausnehmungen 26, 27 weisen vorzugsweise eine Breite von ebenfalls 3 mm auf. So kann ein den Verbindungskanal 12 bildendes Sandwich-Paket auf einfache Weise und erfindungsgemäß wenig Raum verbrauchend in lediglich einem Stirnbereich der hydraulischen Buchse 1 untergebracht werden.

Die Erfindung ist nicht auf die beschriebene Ausführungsform beschränkt, die in vielfacher Art und Weise abgewandelt werden kann, ohne von dem durch die angehängten Patentansprüche festgelegten Schutzumfang abzuweichen. So kann in einfacher Ausführung der Erfindung, insbesondere zur Realisierung einer kurzen Länge des Durchgangs 12 auch eine kreissegmentförmige Ausnehmung in den Ringelementen 16, 17 eingebracht sein, wobei natürlich ein Anfangs- und Endpunkt der Ausnehmung einen Winkel von weniger als 360 Grad einschließen müssen. Als Materialien für die Ringelemente 16, 17, den Trennring 18, das Abschluss-Ringelement 19 sowie den Deckelring 20 können neben Aluminium oder Kunststoff weitere, die entsprechende Dichtheit gegenüber der Hydraulikflüssigkeit 11 aufweisende Materialien zum Einsatz kommen.

Schließlich kann anstelle des Sicherungsrings 22 auch eine Fixierung des sandwichartigen, zur Bildung des Verbindungskanal 12 dienenden Ringpaketes ein Bördelelement eingesetzt werden. Die Ringelemente 16, 17, in denen die spiralförmige Ausnehmung vorgesehen ist, können anders als beschrieben auch als Vulkanisationsgummiteile, Guss- oder Schmiede- oder schließlich auch Spritzgussteile ausgeführt sein.

### Bezugszeichenliste:

- 1: Hydraulische Buchse / Radsatz-Führungsbuchse
- 2: Zapfen
- 3: äußeres Gehäuseelement
- 4: Ringspalt
- 5a,b: Stützringe
- 5c: inneres Gehäuseelement
- 6: gummielastisches Element
- 7: axiale Aufnahmeöffnung
- 8: Dichtungsring
- 9c,d: Kammer für Hydraulikflüssigkeit
- 10: Einfüllkanal
- 10a: Öffnung von 10
- 11: Hydraulikflüssigkeit
- 12: Verbindungskanal, Überlaufkanal
- 13: Kragenabschnitt von 3
- 14: Anlagering
- 16: Ringelement
- 17: Ringelement
- 18: Trennring
- 19: Abschluss-Ringelement
- 20: Deckelring
- 21: O-Ring
- 22: Sicherungsring
- 23: stirnringartiger Abschnitt von 3
- 24: Ringausnehmung in Stützring 5b
- 24b: ringartiger Anschlagabschnitt i.d. Stützring 5b
- 25: Zu- bzw. Abfuhrkanal
- 26: spiralförmige Ausnehmung
- 27: spiralförmige Ausnehmung
- 28: O-Ring
- 29: Eintrittsöffnung in 26
- 31: Austrittsöffnung in 26
- 33: Bohrung
- 35: Bohrung in 27
- 37: Bohrung in 27
- 38: Bohrung in Trennring 18
- 39: Bohrung in Ringelement 16
- 41: Bohrung in Ringelement 16
- 43: Bohrung in Trennring 18
- 45: Bohrung in Ringelement 17

## Patentansprüche

1. Hydraulische Buchse, insbesondere in einem Lager zur elastischen Verbindung von Teilen eines Schienenfahrwerks, wobei die hydraulische Buchse in einem inneren Gehäuseelement (5c) eine axiale Aufnahmeöffnung (7) zur Aufnahme eines Zapfens (2) aufweist und das innere Gehäuseelement (5c) radial von einem äußeren Gehäuseelement (3) unter Ausbildung eines Ringspaltes (4) umfasst wird,
- wobei in dem Ringspalt (4) ein Ringfederelement (6) aus gummielastischen Material angeordnet ist,
- wobei das Ringfederelement (6) mindestens zwei über Teilbereiche seines Umfangs sich erstreckende und mit einem Hydraulikfluid (11) befüllbare Kammern (9c, 9d) zum Gehäuseelement (3) bildet,
- wobei die befüllbaren Kammern (9c, 9d) durch mindestens einen Verbindungskanal (12) miteinander verbunden sind,
**dadurch gekennzeichnet,**
- **dass** an jeder Stirnseite (1a, 1b) der hydraulischen Buchse (1) ein axial außenseitig angeordnetes ringförmiges Einfassungselement (5a, 5b) vorgesehen ist, welches im Zusammenwirken mit den Gehäuseelementen (3, 5c)) und dem Ringfederelement (6) den Ringspalt axial begrenzt und
- **dass** der Verbindungskanal in einem der Einfassungselemente (5a, 5b) angeordnet ist, wobei das Einfassungselement (5a, 5b) Einrichtungen (16, 17, 18, 19, 24b)) zur Bildung oder Bereitstellung des Verbindungskanals (12) aufweist,
- wobei die Einrichtungen zur Bereitstellung des Verbindungskanals (12) von außen zugänglich und beeinflussbar ausgebildet sind.

2. Hydraulische Buchse nach Anspruch 1, bei der eines der Einfassungselemente (5a) den Verbindungskanal (12) und das andere Einfassungselemente (5b) einen mit mindestens einer befüllbaren Kammer verbundenen Füllkanal und/oder Entlüftungskanal aufweist.

3. Hydraulische Buchse nach Anspruch 1 oder 2, bei der der Verbindungskanal (12) radial außerhalb der im Ringspaltes (4) vorgesehenen mit einem Hydraulikfluid (11) befüllbaren Kammern (9c, 9d) und/oder außerhalb des im Ringspaltes (4) vorgesehenen Ringfederelementes (6) ausgebildet ist.

4. Hydraulische Buchse nach einem der Ansprüche 1 bis 3, bei der der Verbindungskanal (12) in einer im wesentlichen parallelen Ebene zu einer der Stirnseiten (1b) der Buchse (1) und um die axiale Aufnahmeöffnung (7) verläuft,.

5. Hydraulische Buchse nach einem der Ansprüche 1 bis 4, bei der der Verbindungskanal (12) in einer in einem der Einfassungselemente (5b) eingebrachten Ringausnehmung (24) verläuft.

6. Hydraulische Buchse nach einem der Ansprüche 1 bis 5, bei der der Verbindungskanal (12) als eine in einem der Einfassungselemente (5b) eingebrachte Ringnut oder Ringausnehmung (24) ausgebildet ist, wobei der Kanal bzw. der Kanalquerschnitt von Ringelementen oder Ringabschnitten (24b, 18, 19) abgedeckt oder begrenzt ist.

7. Hydraulische Buchse nach einem der Ansprüche 1 bis 6, bei der die Einrichtungen zur Bereitstellung eines Verbindungskanals (12) durch einen oder mehrere um die axiale Aufnahmeöffnung (7) geführte, in der Ringausnehmung angeodnete und mit einer Nut oder Ausnehmung (26, 27) versehene Ringe (16, 17) gebildet werden, wobei die Nut oder Ausnehmung (26, 27) axial von weiteren Ringen oder Ringabschnitten (24b, 18, 19) abgedeckt ist.

8. Hydraulische Buchse nach Anspruch 6 oder 7, bei der die zur Abdeckung der Nuten oder Ausnehmungen vorgesehenen Ringe oder Ringabschnitten (18,19) mit Bohrungen oder Durchgängen (33, 38, 39) zu den Nuten oder Ausnehmungen (26, 27) versehen sind.

9. Hydraulische Buchse nach einem der Ansprüche 1 bis 8, **dadurch gekennzeichnet, dass** der Verbindungskanal 12 im Wesentlichen als ebene Spirale oder Mehrfachspirale ausgeführt ist.

10. Hydraulische Buchse nach einem der Ansprüche 1 bis 9, bei der der Verbindungskanal (12) im Wesentlichen kreisbogenförmig ausgebildet ist oder aus kreisbogenförmigen Teilkanälen besteht.

11. Hydraulische Buchse nach einem der Ansprüche 1 bis 10, bei der mehrere gegeneinander verdrehbare mit einer Nut oder Ausnehmung (26, 27) versehene Ringe (16, 17) und/oder gegeneinander verdrehbare und mit Bohrungen oder Durchgängen (33, 38, 39) versehene Ringe oder Ringabschnitten (18, 19) axial so nebeneinander angeordnet sind, dass durch ein relativ zueinander erfolgendes Verdrehen der Ringe oder Ringabschnitten (16, 17, 18, 19) die Länge des Verbindungskanals (12) zwischen den Kammern (9c, 9d) verändert wird.

12. Hydraulische Buchse nach einem der Ansprüche 1 bis 11, **dadurch gekennzeichnet, dass** die Ringabschnitte (24, 18, 19) von einem parallel zur Stirnseite (1b) der Buchse (1) vorgesehenen, ringartigen Anschlagabschnitt (24b) des einen Einfassungselements (5b) und wenigstens einem Ringelement (18, 19) gebildet werden.

13. Hydraulische Buchsenach einem der Ansprüche 6 bis 12, **dadurch gekennzeichnet, dass** der Verbindungskanal (12) durch wenigstens zwei parallel zu der Stirnseite (1b) verlaufende und durch axiale Bohrungen (31, 33, 35) verbundene Ausnehmungen (26, 27) gebildet wird.

14. Lager mit einer hydraulischen Buchse nach einem oder mehreren der vorangehenden Ansprüche zur elastischen Verbindung von Teilen eines Laufwerks, eines Fahrzeugs, insbesondere eines Schienenfahrzeugs, und/oder von beweglichen Maschinenelementen, **dadurch gekennzeichnet, dass** ein Zapfen (2) des Laufwerks und/oder der Maschinenelemente von der Aufnahmeöffnung (7) dieser hydraulischen Buchse aufgenommen wird.

## Claims

1. Hydraulic bushing, in particular in a bearing for the elastic connection of parts of a rail running gear, wherein the hydraulic bushing has, in an inner housing element (5c), an axial receiving opening (7) for receiving a journal (2), and the inner housing element (5c) is enclosed radially by an outer housing element (3), forming an annular gap (4),
- wherein an annular spring element (6) made of rubber elastic material is arranged in the annular gap (4),
- wherein the annular spring element (6) forms at least two chambers (9c, 9d), associated with the housing element (3), that extend over subregions of the circumference thereof and are fillable with a hydraulic fluid (11),
- wherein the fillable chambers (9c, 9d) are connected together by at least one connecting duct (12),
**characterized**
- **in that** an axially externally arranged annular bordering element (5a, 5b) is provided on each end face (1a, 1b) of the hydraulic bushing (1), said bordering element (5a, 5b), in conjunction with the housing elements (3, 5c) and the annular spring element (6), axially delimiting the annular gap, and
- **in that** the connecting duct is arranged in one of the bordering elements (5a, 5b), wherein the bordering element (5a, 5b) has devices (16, 17, 18, 19, 24b) for forming or providing the connecting duct (12),
- wherein the devices for providing the connecting duct (12) are accessible from the outside and configured in an influenceable manner.

2. Hydraulic bushing according to Claim 1, wherein one of the bordering elements (5a) has the connecting duct (12) and the other bordering element (5b) has a filling duct and/or venting duct connected to at least one fillable chamber.

3. Hydraulic bushing according to Claim 1 or 2, wherein the connecting duct (12) is formed radially outside the chambers (9c, 9d) that are provided in the annular gap (4) and are fillable with a hydraulic fluid (11) and/or is formed outside the annular spring element (6) provided in the annular gap (4).

4. Hydraulic bushing according to one of Claims 1 to 3, wherein the connecting duct (12) extends in a substantially parallel plane to one of the end faces (1b) of the bushing (1) and about the axial receiving opening (7).

5. Hydraulic bushing according to one of Claims 1 to 4, wherein the connecting duct (12) extends in an annular recess (24) introduced into one of the bordering elements (5b).

6. Hydraulic bushing according to one of Claims 1 to 5, wherein the connecting duct (12) is in the form of an annular groove or annular recess (24) introduced into one of the bordering elements (5b), wherein the duct, or the duct cross section, is covered or delimited by annular elements or annular portions (24b, 18, 19).

7. Hydraulic bushing according to one of Claims 1 to 6, wherein the devices for providing a connecting duct (12) are formed by one or more rings (16, 17) that are guided around the axial receiving opening (7), are arranged in the annular recess and are provided with a groove or recess (26, 27), wherein the groove or recess (26, 27) is covered axially by further rings or annular portions (24b, 18, 19).

8. Hydraulic bushing according to Claim 6 or 7, wherein the rings or annular portions (18, 19) provided to cover the grooves or recesses are provided with bores or passages (33, 38, 39) to the grooves or recesses (26, 27).

9. Hydraulic bushing according to one of Claims 1 to 8, **characterized in that** the connecting duct (12) is embodied substantially as a planar spiral or multiple spiral.

10. Hydraulic bushing according to one of Claims 1 to 9, wherein the connecting duct (12) is formed substantially in a circular arc-shaped manner or consists of circular arc-shaped sub-ducts.

11. Hydraulic bushing according to one of Claims 1 to 10, wherein a plurality of rings (16, 17) that are twistable with respect to one another and provided with a groove or recess (26, 27), and/or rings or annular portions (18, 19) that are twistable with respect to one another and provided with bores or passages (33, 38, 39), are arranged axially alongside one another such that, as a result of the rings or annular portions (16, 17, 18, 19) being twisted relative to one another, the length of the connecting duct (12) between the chambers (9c, 9d) is changed.

12. Hydraulic bushing according to one of Claims 1 to 11, **characterized in that** the annular portions (24, 18, 19) are formed by an annular stop portion (24b), provided parallel to the end face (1b) of the bushing (1), of one bordering element (5b) and by at least one annular element (18, 19).

13. Hydraulic bushing according to one of Claims 6 to 12, **characterized in that** the connecting duct (12) is formed by at least two recesses (26, 27) that extend parallel to the end face (1b) and are connected by axial bores (31, 33, 35).

14. Bearing, having a hydraulic bushing according to one or more of the preceding claims, for the elastic connection of parts of running gear, of a vehicle, in particular of a rail vehicle, and/or for the elastic connection of movable machine elements, **characterized in that** a journal (2) of the running gear and/or of the machine elements is received by the receiving opening (7) of said hydraulic bushing.

## Revendications

1. Douille hydraulique, en particulier dans un palier pour la liaison élastique de pièces d'un train de roulement sur rails, la douille hydraulique présentant, dans un élément de logement intérieur (5c), une ouverture de réception axiale (7) pour recevoir un tourillon (2) et l'élément de logement intérieur (5c) étant entouré radialement par un élément de logement extérieur (3) pour réaliser une fente annulaire (4),
- un élément de ressort annulaire (6) en matériau ayant l'élasticité du caoutchouc étant disposé dans la fente annulaire (4),
- l'élément de ressort annulaire (6) formant au moins deux chambres (9c, 9d) vers l'élément de logement (3), pouvant être remplies de fluide hydraulique (11), s'étendant sur des régions partielles de sa périphérie,
- les chambres (9c, 9d) pouvant être remplies étant reliées l'une à l'autre par au moins un canal de liaison (12),
**caractérisée en ce**
- **qu'**un élément de bordure annulaire (5a, 5b) disposé axialement du côté extérieur est prévu au niveau de chaque côté frontal (1a, 1b) de la douille hydraulique (1), lequel, par coopération avec les éléments de logement (3, 5c) et l'élément de ressort annulaire (6), limite axialement la fente annulaire et
- en ce que le canal de liaison est disposé dans l'un des éléments de bordure (5a, 5b), l'élément de bordure (5a, 5b) présentant des dispositifs (16, 17, 18, 19, 24b) pour former ou fournir le canal de liaison (12),
- les dispositifs pour fournir le canal de liaison (12) étant réalisés de manière accessible et influençable depuis l'extérieur.

2. Douille hydraulique selon la revendication 1, dans laquelle l'un des éléments de bordure (5a) présente le canal de liaison (12) et l'autre élément de bordure (5b) présente un canal de remplissage et/ou un canal de désaérage relié(s) à au moins une chambre pouvant être remplie.

3. Douille hydraulique selon la revendication 1 ou 2, dans laquelle le canal de liaison (12) est réalisé radialement à l'extérieur des chambres (9c, 9d) pouvant être remplies avec un fluide hydraulique (11), prévues dans la fente annulaire (4) et/ou à l'extérieur de l'élément de ressort annulaire (6) prévu dans la fente annulaire (4).

4. Douille hydraulique selon l'une quelconque des revendications 1 à 3, dans laquelle le canal de liaison (12) s'étend dans un plan essentiellement parallèle à l'un des côtés frontaux (1b) de la douille (1) et autour de l'ouverture de réception axiale (7).

5. Douille hydraulique selon l'une quelconque des revendications 1 à 4, dans laquelle le canal de liaison (12) s'étend dans un évidement annulaire (24) réalisé dans l'un des éléments de bordure (5b) .

6. Douille hydraulique selon l'une quelconque des revendications 1 à 5, dans laquelle le canal de liaison (12) est réalisé sous la forme d'une rainure annulaire ou d'un évidement annulaire (24) réalisé(e) dans l'un des éléments de bordure (5b), le canal ou la section transversale du canal étant recouvert(e) ou limité(e) par des éléments annulaires ou des segments annulaires (24b, 18, 19) .

7. Douille hydraulique selon l'une quelconque des revendications 1 à 6, dans laquelle les dispositifs pour fournir un canal de liaison (12) sont formés par une ou plusieurs bagues (16, 17) guidées autour de l'ouverture de réception axiale (7), disposées dans l'évidement annulaire et pourvues d'une rainure ou d'un évidement (26, 27), la rainure ou l'évidement (26, 27) étant recouvert(e) axialement par d'autres bagues ou segments de bague (24b, 18, 19).

8. Douille hydraulique selon la revendication 6 ou 7, dans laquelle les bagues ou segments de bague (18, 19) prévu(e)s pour recouvrir les rainures ou les évidements sont pourvu(e)s d'alésages ou de passages (33, 38, 39) allant vers les rainures ou les évidements (26, 27).

9. Douille hydraulique selon l'une quelconque des revendications 1 à 8, **caractérisée en ce que** le canal de liaison (12) est réalisé essentiellement sous forme de spirale plane ou de spirale multiple.

10. Douille hydraulique selon l'une quelconque des revendications 1 à 9, dans laquelle le canal de liaison (12) est réalisé essentiellement en forme d'arc de cercle ou se compose de canaux partiels en forme d'arc de cercle.

11. Douille hydraulique selon l'une quelconque des revendications 1 à 10, dans laquelle plusieurs bagues (16, 17) pouvant tourner les unes par rapport aux autres, pourvues d'une rainure ou d'un évidement (26, 27), et/ou plusieurs bagues ou segments de bague (18, 19) pouvant tourner les un(e)s par rapport aux autres et pourvu(e)s d'alésages ou de passages (33, 38, 39) sont disposé(e)s axialement les un(e)s à côté des autres de telle sorte que par une rotation les un(e)s par rapport aux autres des bagues ou des segments de bague (16, 17, 18, 19), la longueur du canal de liaison (12) entre les chambres (9c, 9d) soit modifiée.

12. Douille hydraulique selon l'une quelconque des revendications 1 à 11, **caractérisée en ce que** les segments de bague (24, 18, 19) sont formés par une portion de butée annulaire (24b) prévue parallèlement au côté frontal (1b) de la douille (1) de l'un des éléments de bordure (5b) et par au moins un élément annulaire (18, 19).

13. Douille hydraulique selon l'une quelconque des revendications 6 à 12, **caractérisée en ce que** le canal de liaison (12) est formé par au moins deux évidements (26, 27) s'étendant parallèlement au côté frontal (1b) et reliés par des alésages axiaux (31, 33, 35).

14. Palier comprenant une douille hydraulique selon l'une quelconque ou plusieurs des revendications précédentes pour la liaison élastique de pièces d'un train de roulement, d'un véhicule, en particulier d'un véhicule ferroviaire, et/ou d'éléments de machines mobiles, **caractérisé en ce qu'**un tourillon (2) du train de roulement et/ou des éléments de machines est reçu par l'ouverture de réception (7) de cette douille hydraulique.
